# EUROPEAN PATENT APPLICATION

(11) **EP 2 947 440 A1**
(43) Date of publication of application: **25.11.2015**
(21) Application number: 14168849.9
(22) Date of filing: 19.05.2014
(51) Int. Cl.: G01L 1/20, G01L 5/10

(54) **A load securing monitoring device**

(71) Applicant: Ro-Ro International AB, 422 43 Hisings Backa (SE)
(72) Inventor: Lindahl, Mikael, 417 63 Göteborg (SE)
(74) Representative: Ekstedt, Måns

(57) **Abstract**

According to the invention there is provided a load securing monitoring device for monitoring a securing state of a load arranged and secured on a means for transportation, and a system for monitoring a securing state of a load arranged and secured on a vehicle for transportation.

## Description

### Field of the Invention

The present invention relates to a load securing monitoring device for monitoring a securing state of a load arranged and secured on a means for transportation. The present invention further relates to a corresponding system.

### Background

Cargo is transported across long travel distances using various forms or transportation, for example on boats, planes, trucks, etc. Some cargo is more delicate than other often requiring more attention. In some cases the cargo may be bulky or sensitive to impacts requiring further special care. Most commonly, a lashing, a rope, chain, or similar is used for securing the load to the transportation vehicle, trailer, or similar.

During transportation of cargo secured with e.g. a lashing strap, the travel may be rocky which may compromise the securing of the cargo. For example, a truck carrying precious cargo may be travelling on a poor road causing the cargo to move despite being secured with the lashing strap. Thereby, the securing of the cargo may be compromised by repetitive rocking of the cargo. A catastrophic scenario is that the lashing strap is completely loose and the cargo falls off the truck or trailer, or for example that the cargo falls over on a boat deck. Thus, it would be desirable to monitor the state of the securing lash of the cargo.

In WO2009113873 a sensor unit for monitoring the state of fasteners is presented. A measuring element is arranged in the fastener to measure the tension of the fastener. The measuring element disclosed by WO2009113873 is arranged to change its e.g. electrical wire resistance as a response to a changes in tension of the fastener. There is further an electronics card for reading the electrical wire resistance from the measuring element. The electronics card is arranged in the lashing strap or in an extension bulging from the strap or in a loop of the lashing strap.

However, such measuring elements are sensitive to excessive wear and also to the commonly harsh environments they travel through. Furthermore, mounting of a control unit (e.g. the electronics card) in such environments and at the same time providing a robust connection between the control unit and the measuring elements and allow simple replacement of the control unit is not addressed, but desirable.

### Summary of the Invention

In view of the above, it is a general object of the present invention to provide a load securing monitoring device which alleviates the above drawbacks of prior art.

According to a first aspect it is therefore provided a load securing monitoring device for monitoring a securing state of a load arranged and secured on a means for transportation, the load securing monitoring device comprising:
an elongated fibrous securing member;
a sensor unit arranged in contact with the fibrous securing member for monitoring a strain in the fibrous securing member, the sensor unit comprising:
   a sensing part arranged in contact with a textile part, the sensing part being formable to follow an adaptable shape of the elongated fibrous securing member, the sensing part comprising a non-metallic resilient carrier accommodating a plurality of particles, wherein an electric resistance of the sensing part is configured to be modified as a result of a redistribution of the particles in the sensing part; and
   a mechanical and electrical connection element connected to the sensing part; and
a control unit arranged to measure the electric resistance of the sensing part indicative of the strain in the elongated fibrous securing member, the control unit is configured to transmit data indicative of the electric resistance to a central control unit,
wherein the control unit comprises a connection interface for mechanically attaching the control unit to the sensor unit, and for electrically connecting the control unit to the sensing part by means of the mechanical and electrical connection element of the sensor unit.

In accordance with the invention, the elongated fibrous securing member may be e.g. a lashing strap, a rope, or similar.

The means for transportation may for example be a boat, truck, trailer, plane, or any other vehicle, carrier or similar.

The sensor unit is made from a fabric, thus including a fibrous material. The sensor unit is arranged in contact with the securing member by for example sewing or gluing the sensor unit to the securing member. The sensing part may be arranged in a pattern, thus following a path, with an extension at least in the elongated direction of the securing member. The width of the sensing part is smaller than the width of the elongated fibrous securing member in a direction perpendicular to the elongation direction. The carrier is made from a resilient material such that when the shape of the sensor unit changes the carrier adapts its shape and flexes back when the shape of the sensor unit returns to a former state.

The non-metallic resilient carrier accommodates particles. The fact that the carrier is resilient means that the position of each of the particles is maintained unless the resilient carrier is deformed. In other words, the distribution of the particles in the carrier, and therefore the distance between particles, is maintained unless strain or other forces are applied to the carrier. For example, if the carrier is stretched in one direction, the distribution of the particles is changed in that direction, thus the distance in that direction between pairs of particles is changed.

A resistance measured across the sensing part comprising the particles accommodated in the non-metallic carrier, will depend on the distribution of the particles. For example, packing the particles close to each other will result in a different electrical resistance compared to distributing the particles far from each other, thus with a higher average distance between particles.

The control unit acquires data related to the electrical resistance of the sensing part, thereby also related to the strain in the elongated fibrous securing member. The control unit transmits the data, for example via a transceiver of the control unit, to a central control unit. The central control unit may for example be located at a driver of a truck carrying the cargo such that the driver may monitor a securing state of the cargo.

The mechanical and electrical connection element is a combined connection. In other words, when the control unit is connected to the mechanical and electrical connection element via the connection interface of the control unit, the control unit is both electrically and mechanically connected to the sensor unit. No other mechanical or electrical connection is required.

The present invention is based on the realization that a state of a load may be monitored by implementing a sensor unit on the securing member securing the load, and transmitting data indicative of the state to a central control unit monitored by a user. Furthermore, it is also realized that a robust and yet simple means for electrically and mechanically connecting a control unit for each of the sensor units is needed. Thereby, a combined electrical and mechanical connection between the sensor unit and the control unit is realized. Thus, when the control unit is mechanically connected to the sensor unit the control unit is also electrically connected to the sensor unit.

Furthermore, the textile sensor enables a fully flexible sensor unit which may be bent, penetrated, and is not sensitive to corrosion, and is further relatively cheap to produce. Thus, the invention provides for a device for monitoring the state of a load secured on a transporting means in harsh environments.

With the invention, a user may monitor the state of the load, thus identifying a loose lashing strap or equipment (e.g. lashing strap) failure during transportation. A user may further identify a high strain in the lashing strap which may indicate that a load has fallen over. In other situations theft or sabotage may have occurred which may also be indicated by a change in strain in the lashing strap.

The sensor unit and the resilient carrier are flexible and robust. For example, the sensor unit and the resilient carrier may be sewn through for attaching the sensor unit to the elongated fibrous securing member without compromising the functionality of the sensor unit. In this way, the sensor unit may be placed anywhere on the elongated fibrous securing member. The control unit may be mechanically and electrically connected to the sensor unit regardless of the location of the sensor unit.

Furthermore, with the invention, a relatively cheap way for adding monitoring of a securing state of a load is enabled. For example, the sensor unit may be sewn onto a lashing strap and the control may be mechanically and electrically connected to the sensor unit in a simple manner.

In one embodiment of the invention, the connection interface further comprises an elongated connection member arranged in a hole of the control unit for mechanically attaching the control unit to the sensor unit and for electrically connecting the control unit to the sensing part via the mechanical and electrical connection element of the sensor unit. In this way a robust mechanical and electrical connection is enabled. The connection interface may comprise a connector plate that may be pressed against the connection element of the sensor unit.

Furthermore, the elongated connection member may comprise a threaded portion, wherein the connection interface comprises a threaded portion configured to match the threaded portion of the elongated connection member. The elongated connection member may thus be a bolt or a screw arranged in the hole of the control unit and tightened into the threads of the connection interface. This provides for a robust and secure mechanical and electrical connection between the control unit and the sensor unit. Thus, the control unit is kept pressed against the connection element of the sensor unit. Furthermore, a simple means for removing/replacing a control unit is enabled.

Furthermore, the elongated connection member may be arranged through a through-hole in the elongated fibrous securing member and in contact with the mechanical and electrical connection element. Preferably, the elongated connection member is arranged through a through-hole of the sensor unit and the elongated fibrous securing member and connected to the control unit in the hole of the control unit. This way, if the elongated connection member is a bolt, tightening, with the threads of the bolt, the bolt in the hole of the connection interface of the control unit mechanically attaches the control unit to the elongated fibrous securing member and electrically connects the control unit to the sensing part of the sensor unit.

The sensing part may comprise two end portions. The connection element is a first connection element electrically connected to a first end portion of the sensing part, wherein a second connection element is electrically connected to a second end portion of the sensing part, wherein the connection interface is a respective first connection interface, the control unit further comprises a respective second connection interface. This means the control unit is electrically and mechanically connected to two end portions of the sensing part. Thus, the electrical resistance of the sensing part measured by the control unit is measured across the sensing part from the first end portion to the second end portion of the sensing part.

In one embodiment of the invention textile part is comprised in the sensor unit.

In one embodiment of the invention, the sensor unit may be arranged between layers of the elongated fibrous securing member, wherein the connection element and/or the connection interface and/or the elongated connection member is/are arranged to extend through a material of at least one layer of the elongated fibrous securing member. Thus, the sensor unit may be sewn into the layers of the elongated fibrous securing member. For example, the sensor unit may be sewn in between layers of a lashing strap. This way the sensor unit is efficiently integrated into e.g. a lashing strap. Furthermore, the sensor unit may be sewn through without having to take care of any sensitive parts or elements in the sensor unit. Thus, the sewing may even be made through the sensing part of the textile sensing unit.

The textile part is preferably made from a woven material.

In some embodiments, the textile part is part of the elongated fibrous securing element such that the sensing part is arranged directly on an outside surface of the elongated fibrous securing element. In other words, the textile part is part of e.g. a lashing strap.

The control unit preferable comprises a transceiver for transmitting and receiving data from the central control unit. The transmission and receiving is preferably done via wireless communication.

Furthermore, the particles accommodated in the carrier are preferably made from a non-metallic material. For example, the particles may be carbon-black particles.

According to a second aspect of the present invention, there is provided a system for monitoring a securing state of a load arranged and secured on a vehicle for transportation, the system comprising:
at least one load securing monitoring device according to the first aspect; and
a central control unit remotely connected to the load securing monitoring device.

The system may for example comprise one, two, three, five or ten, or more load securing monitoring devices. The central control unit receives data from each of the load securing monitoring devices indicating the strain in the corresponding elongated fibrous securing member, e.g. in a corresponding lashing strap. A user, for example the operator of the transporting means (truck, boat, vessel, car, etc) may then monitor with the load securing monitoring devices the securing state of the load secured with the lashing straps. The central control unit may be a computer, or a mobile phone such as a smartphone having stored thereon software for operating an application showing the state of the load, or the strain in each of the load securing monitoring devices.

In order for the operator to know which load securing monitoring device that corresponds to a corresponding monitored lashing strap, each of the load securing monitoring devices may comprise a unique identification code transmitted from the control unit of each of the load securing monitoring device to the central control unit. In other words, when the operator monitors the strain in each load securing monitoring device on e.g. a display of a computer comprising the central control unit, the operator can identify each load securing monitoring device on the screen. Thus, the identification code may be shown on the display.

In one embodiment, each of the load securing monitoring devices comprises a location determination device. In this way, by transmitting location information of the corresponding load securing monitoring device the operator may relate the strain in a particular lash, having a unique identification code, with a location of the lashing strap relative the load. In case of a loose strap, the operator may then immediately, on the screen or display of the central control unit, identify not only which lashing strap is loose but also where it is located. In particular, the location of each load securing monitoring device is received by the central control unit from each of the load securing monitoring devices. The location determination device may for example be a global positioning system (GPS) device. The GPS may for example only be turned on for a short moment for the central control unit to receive the necessary location information from each of the load securing monitoring devices and relate the locations with predetermined securing locations of the load.

In one embodiment, the system may further comprise a second central control unit, wherein the load securing monitoring device(s) is/are configured to handover communication between the two central control units. This is advantageous is situations where a first means of transportation transports a load which securing state is monitored by a load securing device delivers the load to a second means or transportation. For example, if a truck transporting the cargo, delivers the cargo to a ship for continued transportation. The monitoring may then be handover from the control unit of the truck to a control unit of the ship.

Further effects and features of this second aspect of the present invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of Drawings

These and other aspects of the present invention will now be described in more detail, with reference to the appended drawings showing a currently preferred embodiment of the invention, wherein:
Fig. 1 schematically shows an exemplary application for an exemplary embodiment of the invention; and
Fig. 2 shows an exploded view of an exemplary embodiment of the invention;

### Detailed Description of Embodiments of the Invention

In the following description, the present invention is mainly described with reference to a lashing strap. However, the invention may be applied to other similar elongated securing members and should therefore note be considered as limiting the scope of the invention.

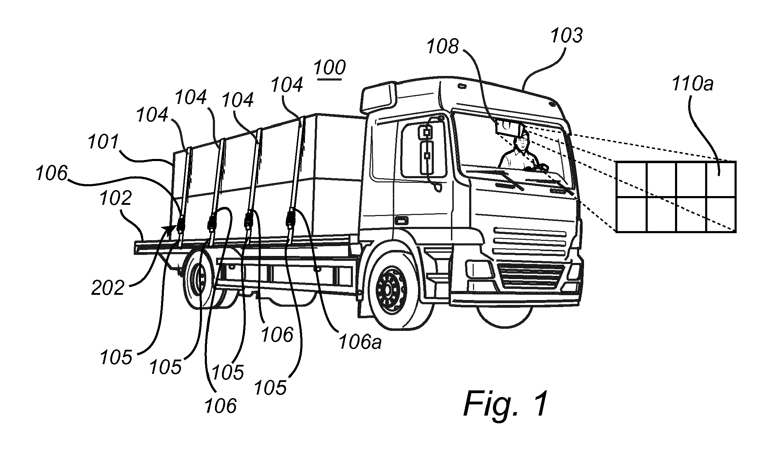

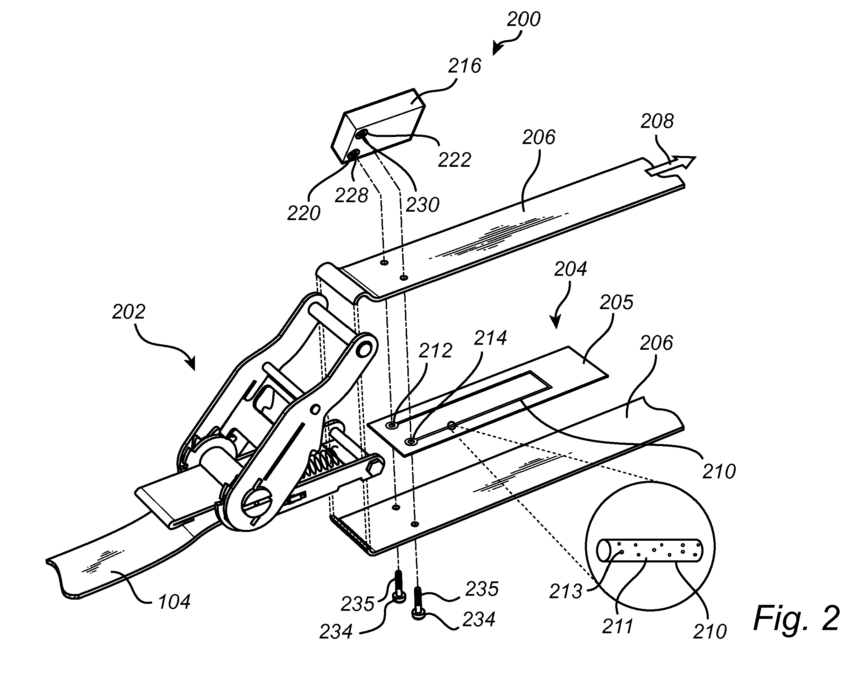

Fig. 1 illustrates a system 100 in an exemplary application. In Fig. 1 a load 101 is arranged on a trailer 102 on a means of transportation in the form of a truck 103. A plurality of lashing straps 104 are arranged around the load to secure the load on the trailer. Each of the lashing straps has a fastener 202 (for example, in the form of a ratchet tie down) for tightening the corresponding lashing strap 104 around the load for securing the load on the trailer. Adjacent to the fastener, there is a load securing monitoring device 106 (see Fig. 2) comprising an elongated fibrous securing members 105 being of lashing strap type. Each load securing monitoring device 106 comprises a control unit (not shown, see Fig. 2) comprising a transceiver. With the transceiver, the control unit of each load securing monitoring device is able to communicate with a central control unit 108. Each load securing monitoring device 106 measures the strain in the corresponding lashing strap 105 and transmits, with the transceiver data indicative of the strain to the central control unit. Thereby, a user, in this case the driver of the truck can monitor the state of the securing of the load from inside the cabin of the truck. Furthermore, a unique identification code of each of the load securing monitoring devices enables the driver to identify which of the monitored strain that corresponds which load securing monitoring device 106. For example, the indicated strain displayed on the screen portion 110a corresponds to the strain measured by load securing monitoring device 106a.

Fig. 2 shows an exploded view of a load securing monitoring device 200 according to an embodiment of the invention. The load securing monitoring device is attached to a ratchet tie down fastener 202 known in the art. In this case, the fastener is attached to the lashing strap 104 shown in Fig. 1. A sensor unit 204, comprising a textile part 205 made from a textile material, for example a woven material, is arranged between layers of an elongated fibrous securing member 206. The elongated fibrous securing member 206 has a main extension direction 208. The sensor unit 204 is arranged in contact with the elongated fibrous securing member 206, for example by being sewn to the elongated fibrous securing member 206. Furthermore, the sensor unit 204 comprises a sensing part 210 which is formable to follow the shape of the elongated fibrous securing member 206. The sensing part 210 is arranged on the textile part 205. The sensing part 210 includes a non-metallic carrier 211 accommodating a plurality of particles 213 (only one particle is numbered in order to avoid cluttering in the drawing). The non-metallic carrier 211 may be made from e.g. silicone or another stretchable and resilient material suitable for accommodating the particles 213. The carrier 211 ensures that a distribution of the particles 213 is maintained unless the carrier 211 is deformed, for example by exposing the elongated fibrous securing member 206 to strain. In such case a distance between particles 213 is modified. In one embodiment, the particles 213 may be carbon-black particles. Moreover, the particles 213 may have size in the range 10 nm - 1 mm and the sensing part 210 (thus, the carrier 211) may have a width in the range 1-10 mm.

Furthermore, if the distribution of particles 213 is modified, an electrical resistance measured across the sensing part 210 from a first mechanical and electrical connection element 212 to a second mechanical and electrical connection element 214 is modified. In other words, if the elongated fibrous securing member 206 is exposed to a strain, or if a strain in the elongated fibrous securing member 206 is changed, the electrical resistance across the sensing part 210 is changed. The electrical resistance across the sensing part 210 is measured by a control unit 216. The control unit 216 comprises a transceiver for transmitting data indicative of the measured electrical resistance to a central control unit as described with reference to Fig. 1.

The sensor unit 204 comprises mechanical and electrical connection elements 212 and 214. Correspondingly, the control unit 216 comprises a first and a second connection interface 220 and 222. The control unit is mechanically and electrically connected to the connection elements 212, 214 of the sensor unit 204 via the connection elements 212, 214 and the connection interfaces 220, 222. Furthermore, elongated connection members 234 are in holes 228, 230 of the control unit 216 and attach the connection interface 220, 222 of the control unit 216 with the connection elements 212, 214 of the sensor unit 204. In one embodiment the elongated connection members 234 are bolts or screws comprising threads 235 that are tied down with the connection elements 212, 214 via threads of the connection elements 212, 214. In this way the screws or bolts ensures a rigid mechanical and electrical connection between the control unit 216 and the sensor unit 204. The elongated connection members 234 are further arranged through the elongated fibrous securing member 206 and the sensor unit 204. Alternatively, the mechanical and electrical connection between the control unit and the sensor unit is enabled by a snap fastener, such as for example a snap button. This way, one half of the snap connection, for example the "male" part is arranged on the sensor unit and the other half (the "female" part) is arranged on the control unit.

The combined mechanical and electrical connection between the sensor unit 204 and the control unit 216 enables a simple yet robust connection. With the mechanical and electrical connection elements 212, 214 and the corresponding connection interface 220, 222, replacement of a control unit 216 only requires a simple mechanical fastening of the control unit 216 which automatically also electrically connects the control unit with the sensor unit although the sensor unit 204 is connected between layers of the lashing strap.

The control unit 216 further comprises a housing which ensures that the electrical components of the control unit 216 are well protected from liquids, such as e.g. water and acids. The housing further provides for physical protection from mechanical forces.

Furthermore, the control unit 216 comprises energy storage, for example a rechargeable battery for powering processing circuitry and the transceiver of the control unit 216.

In one embodiment of the invention, the sensing part is arranged directly on the elongated fibrous securing member. In other words the textile part is part of the elongated fibrous securing member. In this embodiment, the non-metallic carrier accommodating the particles is attached directly on the surface of the elongated fibrous securing member.

The control unit is preferably a micro processor or any other type of computing device. Similarly, the computer readable medium may be any type of memory device, including one of a removable nonvolatile/volatile random access memory, a hard disk drive, a floppy disk, a CD-ROM, a DVD-ROM, a USB memory, an SD memory card, or a similar computer readable medium known in the art.

Additionally, variations to the disclosed embodiments can be understood and effected by the skilled person in practicing the claimed invention, from a study of the drawings, the disclosure, and the appended claims. For example, the sensing part may be embodied in different shapes than the straight geometry depicted herein. The sensing part may have arbitrary shapes as long as there is an extension in the elongation extension 208 of the securing member.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A load securing monitoring device (106, 200) for monitoring a securing state of a load (101) arranged and secured on a means for transportation, said load securing monitoring device comprising:
an elongated fibrous securing member (105, 206);
a sensor unit (204) arranged in contact with said fibrous securing member for monitoring a strain in said fibrous securing member, said sensor unit comprising:
a sensing part (210) arranged in contact with a textile part (205), said sensing part being formable to follow an adaptable shape of said elongated fibrous securing member, said sensing part comprising a non-metallic resilient carrier (211) accommodating a plurality of particles (213), wherein an electric resistance of said sensing part is configured to be modified as a result of a redistribution of said particles in said sensing part; and
a mechanical and electrical connection element (212, 214) connected to said sensing part;
and, a control unit (216) arranged to measure said electric resistance of said sensing part indicative of said strain in said elongated fibrous securing member, said control unit is configured to transmit data indicative of said electric resistance to a central control unit (108),
wherein said control unit comprises a connection interface (220, 222) for mechanically attaching said control unit to said sensor unit, and for electrically connecting said control unit to said sensing part by means of said mechanical and electrical connection element of said sensor unit.

2. The load securing monitoring device according to claim 1, wherein said connection interface further comprises an elongated connection member (234) arranged in a hole (228, 230) of said control unit for mechanically attaching said control unit to said sensor unit and for electrically connecting said control unit to said sensing part via said mechanical and electrical connection element of said sensor unit.

3. The load securing monitoring device according to claim 2, wherein said elongated connection member comprises a threaded portion (235), wherein said connection interface comprises a threaded portion configured to match said threaded portion of said elongated connection member.

4. The load securing monitoring device according to claim 3, wherein said elongated connection member is arranged through a through-hole in said elongated fibrous securing member and in contact with said mechanical and electrical connection element.

5. The load securing monitoring device according to any one of the preceding claims, wherein said connection element is a first connection element (212) electrically connected to a first end portion of said sensing part, wherein a second connection element (214) is electrically connected to a second end portion of said sensing part, wherein said connection interface is a respective first connection interface, said control unit further comprises a respective second connection interface.

6. The load securing monitoring device according to any one of the preceding claims, wherein said textile part is comprised in said sensor unit.

7. The load securing monitoring device according to claim 6, wherein said sensor unit is arranged between layers of said elongated fibrous securing member, wherein said connection element and/or said connection interface and/or said elongated connection member is/are arranged to extend through a material of at least one layer of said elongated fibrous securing member.

8. The load securing monitoring device according to any one of claims 1 to 5, wherein said textile part is part of said elongated fibrous securing element such that said sensing part is arranged directly on an outside surface of said elongated fibrous securing element.

9. The load securing monitoring device according to any one of claims 1 to 7, wherein said textile part is made from a woven material.

10. The load securing monitoring device according to any of the preceding claims, wherein said control unit comprises a transceiver for receiving and transmitting data from/to said central control unit.

11. The load securing monitoring device according to any of the preceding claims, wherein said particles are non-metallic.

12. A system for monitoring a securing state of a load arranged and secured on a vehicle for transportation, said system comprising:
at least one load securing monitoring device according to any one of the preceding claims; and
a central control unit remotely connected to said load securing monitoring device.

13. The system according to claim 12, wherein said system comprises at least two load securing monitoring devices remotely connected to said central control unit.

14. The system according to claim 12 or 13, wherein each of said load securing monitoring devices comprises a unique identification code transmitted from the control unit of each of said load securing monitoring devices to said central control unit.

15. The system according to any one of claims 12 to 14, further comprising a second central control unit, wherein said load securing monitoring device(s) is/are configured to handover communication between said two central control units.
